(19) Europäisches Patentamt
European Patent Office
Office européen des brevets

(11) Veröffentlichungsnummer: **0 206 209**
**B1**

(12) **EUROPÄISCHE PATENTSCHRIFT**

(45) Veröffentlichungstag der Patentschrift: **14.03.90**

(51) Int. Cl.$^5$: **C 07 C 261/04**

(21) Anmeldenummer: **86108208.9**

(22) Anmeldetag: **16.06.86**

(54) **Neue Acylcyanamide und ihre Herstellung.**

(30) Priorität: **24.06.85 DE 3522532**

(43) Veröffentlichungstag der Anmeldung:
**30.12.86 Patentblatt 86/52**

(45) Bekanntmachung des Hinweises auf die Patenterteilung:
**14.03.90 Patentblatt 90/11**

(84) Benannte Vertragsstaaten:
**AT BE CH DE FR GB IT LI NL SE**

(56) Entgegenhaltungen:
**EP-A-0 087 394**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Hase, Christian, Dr.**
**Millrather Weg 29**
**D-4006 Erkrath (DE)**
Erfinder: **Wegemund, Bernd, Dr.**
**Händelweg 3**
**D-5657 Haan (DE)**
Erfinder: **Erwied, Werner, Dr.**
**Bruchhauserweg 31**
**D-4010 Hilden (DE)**
Erfinder: **Krampitz, Dieter**
**Zeppelinstrasse 29**
**D-4050 Mönchengladbach 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 206 209 B1

**Beschreibung**

Die Erfindung betrifft neue Acylcyanamide zweiwertiger Metalle, die sich als Wärmestabilisatoren für chlorhaltige Polymerisate, insbesondere für Polyvinylchlorid oder im wesentlichen Vinylchlorid enthaltende Polymerisate eignen, sowie ein Verfahren zur Herstellung dieser Acylcyanamide.

Bei der formgebenden Verarbeitung von thermoplastischen Polymerisaten zu Rohren, Flaschen, Profilen, Folien und dergleichen, beispielsweise durch Extrudieren, Spritzgießen, Blasen, Tiefziehen und Kalandrieren, kann bei den dabei auftretenden hohen Temperaturen leicht ein Abbau des Kunststoffs eintreten. Dies führt zu unerwünschten Verfärbungen und zu einer Minderung der mechanischen Eigenschaften. Aus diesem Grund setzt man den Polymerisaten vor der Warmverformung Stabilisatoren zu, die einem solchen Abbau entgegenwirken. Für Polyvinylchlorid und im wesentlichen Vinylchlorid enthaltende Mischpolymerisate setzt man als Wärmestabilisatoren vor allem anorganische und organische Bleisalze, organische Antimonverbindungen, Organozinnverbindungen sowie Cadmium-/Bariumcarboxylate und -phenolate ein. Die genannten Metallverbindungen werden gewöhnlich als Primärstabilisatoren bezeichnet; zur Verbesserung ihrer Wirksamkeit setzt man ihnen häufig Sekundär- oder Co-Stabilisatoren zu. Weitere Einzelheiten über die für Vinylchloridpolymerisate gebräuchlichen Wärmestabilisatoren können der einschlägigen Literatur entnommen werden, beispielsweise der Encyclopedia of Polymer Science and Technology, Band 12, New York, London, Sydney, Toronto 1970, Seiten 737 bis 768.

Die genannten Stabilisatoren zeigen in der Praxis normalerweise eine durchaus befriedigende Wirkung. Bei bestimmten Polyvinylchlorid-Mischungen können jedoch unerwünschte Produkteigenschaften auftreten, insbesondere unbefriedigende Anfangs- und/oder Langzeitstabilitätswerte, die sich durch Modifizierung der Stabilisatoren oder Stabilisatorgemische oder durch Anheben der Zusatzmengen nicht beheben lassen. Darüber hinaus bestehen auf bestimmten Einsatzgebieten gegen Blei-, Antimon- und Cadmiumverbindungen Bedenken toxikologischer Art. Eine Reihe von Organozinnverbindungen ist toxikologisch unbedenklich; ihrem breiten Einsatz steht jedoch ihr hoher Preis entgegen. Aus diesem Grund versucht man schon seit langem, diese Verbindungen durch weniger bedenkliche und preisgünstige Substanzen zu ersetzen. In diesem Zusammenhang ist man dazu übergegangen, als Primärstabilisatoren fettsaure Salze, aromatische Carboxylate und Phenolate der Metalle Calcium, Barium, Zink und Aluminium zu verwenden, die gegebenenfalls durch Co-Stabilisatoren wie zum Beispiel organische Phosphite, Iminoverbindungen, Expoxyverbindungen, mehrwertige Alkohole oder 1,3-Diketone ergänzt werden. Diese neueren Stabilisatorsysteme sind jedoch mit dem Nachteil behaftet, daß sie den zu stabilisierenden Formmassen eine zu geringe Anfangsstabilität und/oder eine zu geringe Langzeitstabilität verleihen. Insbesondere beobachtet man bei solchen Stabilisatorkombinationen neuerer Art, die zur Verbesserung der Anfangsstabilität Zinkseifen enthalten, bei Überdosierung der Zinkseifen ein unerwünschtes vorzeitiges Ende der Langzeitstabilität, das sich in einem plötzlichen Schwarzwerden der Polyvinylchlorid-Formmassen (zinc burning) bemerkbar macht. Es besteht daher ein Bedürfnis nach Substanzen, mit deren Hilfe sich die Anfangs- und/oder die Langzeitwirkung von Stabilisatorsystemen für Formmassen auf Basis von Polyvinylchlorid entscheidend verbessern lassen.

Es wurde gefunden, daß sich von Fettsäuren mit 6 bis 22 Kohlenstoffatomen abgeleitete neue Acylcyanamide der Metalle Mangan, Eisen, Kobalt, Nickel, Zink, Cadmium, Kupfer und Blei mit Erfolg zur Stabilisierung von Polyvinylchlorid-Formmassen verwenden lassen. Dabei können diese Acylcyanamide auch zur Modifizierung sowohl von Stabilisatorsystemen auf Basis von Blei-, Antimon-, Cadmium-/Barium- und Organozinnverbindungen als auch von Stabilisatorsystemen auf Basis von Calcium-, Barium-, Zink- und Aluminiumverbindungen eingesetzt werden. Es wurde insbesondere festgestellt, daß sich die Acylcyanamide von toxikologisch unbedenklichen zweiwertigen Metallkationen besonders gut für die Gestaltung von Stabilisatorsystemen der neueren Art eignen. Vor allem kann hier das unerwünschte zinc burning vermieden und die Anfangsstabilität weiter verbessert werden, wenn man anstelle der bisher gebräuchlichen Zinkseifen entsprechende Acylcyanamide einsetzt.

Gegenstand der Erfindung sind demnach Acylcyanamide der Formel (1),

$$(R{-}\overset{\overset{\displaystyle O}{\|}}{C}{-}\overset{\ominus}{N}{-}CN)_2\ \ M^{2\oplus} \qquad (I)$$

in der R einen geradkettigen oder verzweigten Alkyl- oder Alkenylrest mit 5 bis 21 Kohlenstoffatomen bedeutet, der gegebenenfalls mit OH—, O—$CH_2$—$CH_2$—OH— und/oder O—R'-Gruppen substituiert sein kann, wobei R' einen Alkylrest mit 1 bis 4 Kohlenstoffatomen darstellt, während M für ein Mangan-, Eisen-, Kobalt-, Nickel-, Zink-, Cadmium-, Kupfer- und Bleikation steht.

Gegenstand der Erfindung ist weiterhin ein Verfahren zur Herstellung der Acylcyanamide der Formel I, das dadurch gekennzeichnet ist, daß man Acylcyanamid-Alkalimetallsalze der Formel II,

$$(R{-}\overset{\overset{\displaystyle O}{\|}}{C}{-}\overset{\ominus}{N}{-}CN)\ M^{+} \qquad (II)$$

in der R die für die Formel I angegebene Bedeutung hat und M ein Alkalimetallkation, vorzugsweise ein Lithium-, Natrium- oder Kaliumkation, darstellt, in wäßriger oder wäßrig-/methanolischer Lösung mit stöchiometrischen Mengen eines wasserlöslichen Mangan-, Eisen-, Kobalt-, Nickel-, Zink-, Cadmium-, Kupfer- und/oder Bleisalzes umsetzt und das entstandene Acylcyanamid der Formel I aus dem Reaktionsgemisch isoliert.

Als Ausgangsmaterial für die Herstellung der Acylcyanamide der Formel I werden bevorzugt Natriumacylcyanamide der Formel II eingesetzt.

Die Alkalimetallcyanamide der Formel (II) können beispielsweise durch Reaktion von Cyanamid mit Carbonsäurechloriden und nachfolgende Neutralisation mit Alkalimetallhydroxyden, -carbonaten und -bicarbonaten erhalten werden (siehe J. prakt. Chemie, N. F., Bd. 11 (1875) S. 343—347, Bd. 17 (1878) S. 9—13). Für die technische Herstellung der Alkalimetallacylcyanamide eignet sich insbesondere die Umsetzung von Cyanamid mit Alkalimetallmethylat und Fettsäuremethylester in stöchiometrischen Mengen in Methanol als Lösungsmittel. Hier ist für eine vollständige Umsetzung eine Reaktionszeit von 1 bis 5 Stunden bei Rückflußtemperatur ausreichend. Da die Umsetzung quantitativ verläuft, genügt zur Aufarbeitung die Entfernung des Methanols.

Die Herstellung der Acylcyanamide der Formel I erfolgt durch doppelte Umsetzung von Alkalimetallacylcyanamiden mit wasserlöslichen Salzen entsprechender Metalle in wäßriger oder wäßrig-/alkoholischer Lösung. Für diese Umsetzung eignen sich die Chloride, Sulfate und Acetate der genannten Metalle, soweit sie in Wasser gut löslich sind. Die Acylcyanamide der zweiwertigen Metalle sind in Wasser schwer löslich. Dementsprechend fallen sie bei der Herstellung als Niederschläge an, die abfiltiert und getrocknet werden.

Die Acylreste R—CO— der Verbindungen der Formel (I) leiten sich von geradkettigen oder verzweigten, gesättigten oder ungesättigten Fettsäuren mit 6 bis 22 Kohlenstoffatomen ab, beispielsweise von den aus Fetten und Ölen pflanzlichen oder tierischen Ursprungs stammenden Fettsäuren wie Capron-, Capryl-, Caprin-, Laurin-, Myristin-, Palmitin-, Stearin-, Arachidin-, Behen-, Palmitöl-, Öl-, Eruka-, Linol- und Linolensäure. Dabei können die Acylreste von einzelnen Fettsäuren oder von Gemischen solcher Fettsäuren abgeleitet sein, im letzteren Fall insbesondere von Fettsäuregemischen, wie sie bei der Fettspaltung von natürlichen Fetten und Ölen anfallen. Daneben können die Acylreste der Acylcyanamide auch von verzweigten synthetischen Fettsäuren der genannten Kohlenstoffzahl abgeleitet sein. Die Acylreste können auch von Fettsäuren herstammen, die mit OH-Gruppen substituiert sind, beispielsweise von Ricinolsäure und gehärteter Ricinolsäure. Ferner können die Acylreste auch aus Fettsäuren stammen, die mit $O—CH_2—CH_2—OH$-Gruppen und R′—O-Gruppen substituiert sind, wobei R′ einen Alkylrest mit 1 bis 4 Kohlenstoffatomen bedeutet. Solche Fettsäuren sind über Epoxyfettsäuren, beispielsweise Epoxystearinsäure, durch Öffnung des Oxiranrings mit Ethylenglykol oder Alkoholen mit 1 bis 4 Kohlenstoffatomen zugänglich. In einer bevorzugten Ausführungsform der Erfindung sind die Acylreste der Acylcyanamide der Formel (I) von geradkettigen, insbesondere von unsubstituierten Fettsäuren mit 12 bis 18 Kohlenstoffatomen abgeleitet.

Die Acylcyanamide der Formel I zeigen in Polyvinylchlorid-Formmassen eine überdurchschnittliche Wärmestabilisierungswirkung, die durch geeignete Auswahl der Metallkationen sowohl auf die Anfangsstabilität als auch auf die Langzeitstabilität hin ausgerichtet werden kann. Zusätze von Zinkacylcyanamiden wirken sich vor allem positiv auf die Anfangsstabilität der PVC-Formmassen aus, wobei auch mit hohen Dosierungen kein unerwünschtes zinc burning festzustellen ist. Darüber hinaus ist zu beobachten, daß PVC-Formmassen, die Acylcyanamide anstelle von herkömmlichen Stabilisatoren wie zum Beispiel Metallseifen enthalten, eine verbesserte Transparenz aufweisen.

Die Acylcyanamide der Formel (I) können in den Polyvinylchlorid-Formmassen als alleinige Primärstabilisatoren vorhanden sein; sie können aber auch im Gemisch mit anderen, bekannten Primärstabilisatoren wie anorganischen und organischen Bleisalzen, organischen Antimonverbindungen, Organozinnverbindungen, Cadmium-/Bariumcarboxylaten und -phenolaten, fettsauren Salzen, aromatischen Carboxylaten und Phenolaten von Calcium, Barium, Zink und Aluminium vorliegen.

Die stabilisierten Polyvinylchlorid-Formmassen können neben den genannten Primärstabilisatoren bekannte Co-Stabilisatoren, Gleitmittel, Weichmacher, Antioxidantien, Zusätze zur Verbesserung der Schlagzähigkeit, Füllstoffe und andere Hilfsmittel enthalten.

Die Basis der stabilisierten thermoplastischen Formmassen besteht aus Homopolymerisaten oder Mischpolymerisaten des Vinylchlorids. Die Mischpolymerisate enthalten wenigstens 50 Molprozent, vorzugsweise wenigstens 80 Molprozent Vinylchlorid. Die Polymerisate können auf beliebigem Wege, beispielsweise durch Suspensions-, Emulsions- oder Blockpolymerisation hergestellt worden sein. Ihr K-Wert kann zwischen etwa 35 und 80 liegen. Auch Formmassen auf der Grundlage von nachchloriertem Polyvinylchlorid sowie solche auf Basis von Harzgemischen, die überwiegend Homopolymerisate oder Copolymerisate des Vinylchlorids enthalten, können mit dem erfindungsgemäßen Acylcyanamiden stabilisiert werden.

Die Verwendung der erfindungsgemäßen Acylcyanamide der Formel I als Wärmestabilisatoren für chlorhaltige Polymerisate wird hier nicht beansprucht; sie ist vielmehr Gegenstand eines selbständigen Patentgesuchs der Anmelderin vom gleichen Tag.

Die in den nachfolgenden Beispielen enthaltenen Prozentangaben sind, sofern nicht anders angegeben, in Gewichtsprozent.

Beispiele

1. Herstellung der Acylcyanamide der Formel I

Beispiel 1

In einem Reaktionsgefäß mit Rührer, Tropftrichter, Thermometer, Gaseinleitungsrohr und Rückflußkühler wurden bei Raumtemperatur unter Ruhren und Einleiten von Stickstoff 184,3 g einer 29,3 %igen Lösung von Natriummethylat (54 g = 1,0 Mol) in Methanol mit 42 g (1,0 Mol) Cyanamid versetzt. Anschließend wurden 214,3 g (1,0 Mol) Methyllaurat zugegeben, das Gemisch 3 Stunden lang zum Rückflußkochen erhitzt und schließlich auf Raumtemperatur abgekühlt.

In der frisch hergestellten Suspension wurde das Stearoylcyanamid-Natriumsalz nach Zusatz von 2,2 l Wasser bei 75°C in Lösung gebracht. Bei gleichbleibender Temperatur wurde im Verlauf einer Stunde unter Rühren eine Lösung von 110,3 g (0,5 Mol) Zinkdiacetatdihydrat in 600 ml Wasser zugetropft, wobei sich schnell ein weißer Niederschlag bildete. Anschließend wurde eine Stunde lang bei 75°C weitergerührt. Das feste Produkt wurde aus der gekühlten Mischung durch Filtration abgetrennt, mit Wasser gewaschen, bis es frei von Acetat war und bei 60°C im Vakuum bis zur Gewichtskonstanz getrocknet. Die Ausbeute betrug 254 g (99,3% d. Th.)

Analyse
$C_{26}H_{50}N_4O_2Zn$ (MM 516,38)
ber. (%): 60,5 C; 9,8 H; 10,9 N; 6,2 O; 12,7 Zn.
gef. (%): 60,4 C; 9,2 H; 10,4 N; 5,9 O; 13,6 Zn.

IR-Spektrum (KBr; $cm^{-1}$)
1695; 2220.

Beispiel 2

Zu einer Lösung von 246,3 g (1,0 Mol) Lauroylcyanamid-Natriumsalz in 2,4 l Wasser wurde bei 75°C unter Rühren eine Lösung von 110,3 g (0,5 Mol) Zinkacetatdihydrat in 600 ml Wasser getropft, wobei sich ein weißer Niederschlag bildete. Nach Beendigung des Zutropfens wurde das Gemisch eine Stunde lang bei 75°C weitergerührt. Das feste Produkt wurde durch Filtration abgetrennt, mit Wasser gewaschen bis es frei von Acetat war und bis zur Gewichtskonstanz im Vakuum getrocknet. Die Ausbeute betrug 254 g (99,3% d. Th.).

Analyse
$C_{26}H_{50}N_4O_2Zn$ (MM 516,38)
ber. (%): 60,5 C; 9,8 H; 10,9 N; 6,2 O; 12,7 Zn.
gef. (%): 60,4 C; 9,2 H; 10,4 N; 5,9 O; 13,6 Zn.

IR-Spektrum (KBr; $cm^{-1}$)
1693; 2225.

Beispiele 3—12

In analoger Weise wie in Beispiel 1 wurden durch doppelte Umsetzung von Acylcyanamid-Natriumsalzen mit entsprechenden Metallsalzen von Fettsäuren abgeleitete Acylcyanamidsalze mit folgenden zweiwertigen Kationen hergestellt: Blei, Zink, Kobalt, Kupfer und Mangan. Nach der Analyse besaßen alle hergestellten Salze die Zusammensetzung $(Acyl\text{-}CN_2)_2$ M und waren in Wasser nahezu unlöslich. Die Salze des Kobalts, des Kupfers und des Mangans warem im trockenen Zustand blau, blaßgrün bzw. hellbraun gefärbt. In der folgenden Tabelle I sind die Daten einiger Ansätze zur Herstellung der oben genannten Salze wiedergegeben.

TABELLE I

Herstellung von Acylcyanamidsalzen zweiwertiger Kationen

| | Ausgangsmaterialien | | | | | Endprodukte | |
|---|---|---|---|---|---|---|---|
| | Na-Acylcyanamid | | Metallsalz | | Losungsmittel | Ausbeute | IR-Banden |
| Beispiel | Acyl | Menge (Mol) | Art | Menge (Mol) | $H_2O$ (l) | %d.Th. | (CM—[1]) |
| 3 | $C_{12}$ | 1,0 | $Pb(OAc)_2\cdot 3H_2O$ | 0,5 | 2,0 | 95 | 1690;2150 |
| 4 | $C_{18}$ | 0,8 | $Pb(OAc)_2\cdot 3H_2O$ | 0,4 | 4,0 | 94 | 1635;2180 |
| 5 | $C_{12}$ | 1,0 | $Co(OAc)_2\cdot 4H_2O$ | 0,5 | 2,4 | 95 | 1685;2205 |
| 6 | $C_{18}$ | 0,8 | $Co(OAc)_2\cdot 4H_2O$ | 0,4 | 5,5 | 97 | 1610;2205 |
| 7 | $C_{12}$ | 1,0 | $Cu(OAc)_2\cdot H_2O$ | 0,5 | 2,6 | 95 | 1690;2190 |
| 8 | $C_{18}$ | 0,8 | $Cu(OAc)_2\cdot H_2O$ | 0,4 | 6,7 | 99 | 1690;2190 |
| 9 | $C_{12}$ | 1,0 | $MnSO_4\cdot H_2O$ | 0,5 | 2,0 | 95 | 1570;2210 |
| 10 | $C_{18}$ | 0,8 | $MnSO_4\cdot H_2O$ | 0,4 | 3,5 | 98 | 1580;2180 |
| 11 | $C_{18}$(R)* | 0,57 | $Zn(OAc)_2\cdot 2H_2O$ | 0,285 | 1,25 | 95 | 1695;2220 |

*) Acylrest abgeleitet von gehärteter Ricinolsäure

Verwendung der Acylcyanamide der Formel I zur Stabilisierung von Polyvinylchlorid-Formmassen
Herstellung und Prüfung der Walzfelle

In den Beispielen 13 bis 20 wurde die Wirkung der Stabilisatorkombinationen anhand der "statischen Thermostabilität" von Walzfellen geprüft. Zu diesem Zweck wurden Stabilisatorgemische enthaltende Polyvinylchlorid-Formmassen auf einem Laborwalzwerk der Abmessung 450 × 220 mm (Fa. Berstorf) bei einer Walzentemperatur von 170°C und einer Walzendrehzahl von 300 Upm im Gleichlauf im Verlauf von 5 Minuten zu Prüffellen verarbeitet. Die ca. 0,5 mm dicken Felle wurden zu quadratischen Probestücken mit 10 mm Kantenlänge zerschnitten, die anschließend in einem Trockenschrank mit 6 rotierenden Horden (Heraeus FT 420 R) einer Temperatur von 180°C ausgesetzt wurden. Im Abstand von 10 Minuten wurden Proben entnommen und deren Farbveränderung begutachtet.

Beispiel 12

Eine Stabilisator-/Verarbeitungshilfsmittelkombination der Zusammensetzung (GT = Gewichtsteil)

100 GT Calciumstearat
20 GT Stearinsäure
20 GT Paraffin, Smp. 71°C
50 GT Pentaerythritester der Stearinsäure (Molverhältnis 1:1,5; OH-Zahl 212)

wurde durch mechanisches Vermischen der Komponente hergestellt.

Die Stabilisatorkombinationen A, B, C und D wurden durch Zumischen von 5, 10 und 20 Gt Zinklauroylcyanamid bzw.

20 GT Zinkstearoylcyanamid auf 190 GT der oben angegebenen Zusammensetzung erhalten.

Für Vergleichsversuche wurden die Stabilisatorkombinationen E, F und G durch Zumischen von 5, 10 und 20 GT Zinkstearat auf 190 GT der oben angegebenen Grundrezeptur erhalten.

Durch mechanisches Vermischen von Jeweils 100 GT Suspensions-PVC (K-Wert 70; Vestolit [R]S 7054, Hersteller: Chemische Werke Hüls, Marl) mit 2,4—3,9 GT der Stabilisatorkombination A bis G wurden die Polyvinylchlorid-Formmassen A' bis G' erhalten, deren Zusammensetzungen der Tabelle II zu entnehmen sind.

Die stabilisierten Polyvinylchlorid-Formmassen wurden nach der oben angegebenen Methode geprüft. In der Tabelle II ist jeweils die Zeit angegeben, nach der die erste Verfärbung beobachtet wurde und dann der Zeitraum, nach dem der Test wegen zu starker Verfärbung (Stabilitätsabbruch) beendet wurde.

TABELLE II

| Bestandteil (GT) | Polyvinylchlorid-Formmassen | | | | | | |
|---|---|---|---|---|---|---|---|
| | A′ | B′ | C′ | D′ | E′ | F′ | G′ |
| Suspensions-PVC | 100 | 100 | 100 | 100 | 100 | 100 | 100 |
| Calciumstearat | 1,0 | 1,0 | 1,0 | 1,0 | 1,0 | 1,0 | 1,0 |
| Stearinsäure | 0,2 | 0,2 | 0,2 | 0,2 | 0,2 | 0,2 | 0,2 |
| Paraffin | 0,2 | 0,2 | 0,2 | 0,2 | 0,2 | 0,2 | 0,2 |
| Pentaerythritstearinsäureester | 0,5 | 0,5 | 0,5 | 0,5 | 0,5 | 0,5 | 0,5 |
| Zinklauroylcyanamid | 0,5 | 1,0 | 2,0 | — | — | — | — |
| Zinkstearoylcyanamid | — | — | — | 2,0 | — | — | — |
| Zinkstearat | — | — | — | — | 0,5 | 1,0 | 2,0 |
| Erste Verfärbung (min) | 0 | 30 | 30 | 30 | 0 | 20 | 10 |
| Stabilitätsabbruch (min) | 30 | 40 | 50 | 50 | 40 | 40 | 30 |

Beispiel 13

Eine Polyvinylchlorid-Formmasse der Zusammensetzung

100 GT Suspensions-PVC (K-Wert 70; siehe Beispiel 12)
0,2 GT Stearinsäure
0,2 GT Paraffin, Smp. 71°C
0,5 GT Pentaerythritester der Stearinsäure (Molverhältnis 1:1,5; OH-Zahl 212)

wurde mit erfindungsgemäßen Stabilisatorkombinationen aus

a) Natriumalumosilikat, Calciumstearat und Zinklauroylcyanamid,

b) Natriumalumosilikat, Calciumstearoylcyanamid und Zinkstearat bzw. Zinklauroylcyanamid

und zu Vergleichszwecken mit Stabilisatorgemischen aus

c) Natriumalumosilikat, Calciumstearat und Zinkstearat vermischt. Als Natriumalumosilikat wurde ein feinteiliger synthetischer Zeolith NaA ($Na_2O$:$Al_2O_3$:$SiO_2$ = 0,9:1:2,4; Wassergehalt 19 Gewichtsprozent) eingesetzt. Die Zusammensetzungen der so erhaltenen stabilisierten Polyvinylchlorid-Formmassen H′ bis Q′ sind in der Tabelle III angegeben.

Die thermoplastischen Formmassen H′ bis Q′ wurden nach der oben angegebenen Methode auf ihre statische Thermostabilität geprüft. Die gefundenen Ergebnisse sind in der Tabelle III zusammengefaßt.

TABELLE III

| Bestandteil (GT) | Polyvinylchlorid-Formmassen | | | | | | | | | |
|---|---|---|---|---|---|---|---|---|---|---|
| | H′ | I′ | J′ | K′ | L′ | M′ | N′ | O′ | P′ | Q′ |
| Suspensions-PVC | 100 | 100 | 100 | 100 | 100 | 100 | 100 | 100 | 100 | 100 |
| Stearinsäure | 0,2 | 0,2 | 0,2 | 0,2 | 0,2 | 0,2 | 0,2 | 0,2 | 0,2 | 0,2 |
| Paraffin | 0,2 | 0,2 | 0,2 | 0,2 | 0,2 | 0,2 | 0,2 | 0,2 | 0,2 | 0,2 |
| Pentaerythritstearinsäureester | 0,5 | 0,5 | 0,5 | 0,5 | 0,5 | 0,5 | 0,5 | 0,5 | 0,5 | 0,5 |
| Na-Alumosilikat | 1,0 | 1,0 | 1,0 | 1,0 | 1,0 | 1,0 | 1,0 | 1,0 | 1,0 | 1,0 |
| Calciumstearat | 1,0 | 1,0 | 1,0 | — | — | — | 1,0 | 0,5 | 1,0 | 1,0 |
| Zinkstearat | — | — | — | 1,0 | — | — | 0,5 | 1,0 | 1,0 | 2,0 |
| Calciumstearoylcyanamid | — | — | — | 0,5 | 0,5 | 1,0 | — | — | — | — |
| Zinklauroylcyanamid | 0,5 | 1,0 | 2,0 | — | 1,0 | 2,0 | — | — | — | — |
| Erste Verfärbung (min) | 0 | 20 | 30 | 20 | 20 | 40 | 0 | 0 | 0 | 0 |
| Stabilitätsabbruch (min) | 50 | 60 | 60 | 50 | 60 | 70 | 70 | 40 | 50 | 40 |

Beispiel 14

Die thermoplastische Formmasse R' wurde durch Vermischen von

100 GT Suspensions-PVC (K-Wert 68; Vestolit(R) S. 6858, Hersteller: Chemische Werke Hüls, Marl)
0,2 GT Stearinsäure
0,2 GT Paraffin, Smp. 71°C
0,5 GT Pentaerythritester der Stearinsäure (Molverhältnis 1:1,5; OH-Zahl 212)

mit der Stabilisatorkombination R aus

0,5 GT Calciumstearoylcyanamid
1,0 GT Zinklauroylcyanamid

erhalten. Für die Herstellung der Formmassen S' bis AA' wurde die oben angegebene Stabilisatorkombination durch folgende Zusätze modifiziert:

S) 0,5 GT Natriumsalz der Äpfelsäure
T) 0,5 GT Natriumsalz der Weinsäure
U) 0,5 GT Tetrol aus Limonendiepoxid
V) 0,5 GT Additionsprodukt aus $C_{12-14}$-Alkylamin mit 4 Mol Glycid
W) 0,5 GT Rongalit C
X) 0,5 GT 3-Heptyl-4-hexyl-2-pyrazolin-5-on
Y) 1,0 GT Natriumalumosilikat (siehe Beispiel 2)
Z) 0,2 GT Natriumsalz der Äpfelsäure
1,0 GT Natriumalumosilikat (siehe Beispiel 2)
AA) 0,2 GT Natriumsalz der Äpfelsäure
0,5 GT Additionsprodukt aus $C_{12-14}$-Alkylamin und 4 Mol Glycid

Die Zusammensetzungen der auf diese Weise erhaltenen stabilisierten Polyvinylchlorid-Formmassen R' bis AA' können der Tabelle IV entnommen werden.

Die Formmassen R' bis AA' wurden nach der oben angegebenen Methode geprüft. Die gefundenen Ergebnisse sind in der Tabelle IV wiedergegeben.

TABELLE IV

| Bestandteil (GT) | Polyvinylchlorid-Formmassen | | | | | | | | | |
|---|---|---|---|---|---|---|---|---|---|---|
| | R′ | S′ | T′ | U′ | V′ | W′ | X′ | Y′ | Z′ | AA′ |
| Suspensions-PVC | 100 | 100 | 100 | 100 | 100 | 100 | 100 | 100 | 100 | 100 |
| Stearinsäure | 0,2 | 0,2 | 0,2 | 0,2 | 0,2 | 0,2 | 0,2 | 0,2 | 0,2 | 0,2 |
| Paraffin | 0,2 | 0,2 | 0,2 | 0,2 | 0,2 | 0,2 | 0,2 | 0,2 | 0,2 | 0,2 |
| Pentaerythritstearinsäureester | 0,5 | 0,5 | 0,5 | 0,5 | 0,5 | 0,5 | 0,5 | 0,5 | 0,5 | 0,5 |
| Calciumstearoylcyanamid | 0,5 | 0,5 | 0,5 | 0,5 | 0,5 | 0,5 | 0,5 | 0,5 | 0,5 | 0,5 |
| Zinklauroylcyanamid | 1,0 | 1,0 | 1,0 | 1,0 | 1,0 | 1,0 | 1,0 | 1,0 | 1,0 | 1,0 |
| Äpfelsäure, Na-Salz | — | 0,5 | — | — | — | — | — | — | 0,2 | 0,2 |
| Weinsäure, Na-Salz | — | — | 0,5 | — | — | — | — | — | — | — |
| Limonen-Tetrol | — | — | — | 0,5 | — | — | — | — | — | — |
| Alkylamin + 4 Glycid | — | — | — | — | 0,5 | — | — | — | — | 0,5 |
| Rongalit C | — | — | — | — | — | 0,5 | — | — | — | — |
| 3-Heptyl-4-hexyl-2-pyrazolin-5-on | — | — | — | — | — | — | 0,5 | — | — | — |
| Na-Alumosilikat | — | — | — | — | — | — | — | 1,0 | 1,0 | — |
| Erste Verfärbung (min) | 20 | 0 | 30 | 30 | 30 | 0 | 10 | 20 | 20 | 30 |
| Stabilitätsabbruch (min) | 30 | 60 | 50 | 40 | 40 | 50 | 50 | 50 | 60 | 50 |

Beispiel 15

Einem Grundansatz aus

100 GT Suspensions-PVC (K-Wert 70; Vestolit(R)S 7054, Hersteller: Chemische Werke Hüls, Marl)
1,0 GT Calciumstearat
0,5 GT Zinkstearat
0,2 GT Stearinsäure
0,2 GT Paraffin, Smp. 71°C
0,5 GT Pentaerythritester der Stearinsäure (Molverhältnis 1:15; OH-Zahl 212)

wurden 0,1 GT Lauroylcyanamid-Kobaltsalz (Beispiel 5) zugemischt. Die stabilisierte Formmasse wurde dem statischen Thermostabilitätstest unterworfen. Dabei wurde die erste Verfärbung nach 30 Minuten und der Stabilitätsabbruch nach 40 Minuten beobachtet.

Beispiel 16

Einem Grundansatz aus

100 GT Suspensions-PVC (K-Wert 58; Solvic 258 RA; Hersteller: Deutsche Solvay-Werke GmbH, Solingen)
0,3 GT Calciumstearat
1,0 GT Isotridecylstearat

wurden 2,0 GT Stearoylcyanamid-Bleisalz (Beispiel 4) zugemischt. Bei der Prüfung der stabilisierten Formmasse nach dem statischen Thermostabilitätstest wurde die erste Verfärbung nach 10 Minuten und der Stabilitätsabbruch nach 90 Minuten beobachtet. Die erfindungsgemäßen Formmassen zeigen gegenüber Formmassen der gleichen Zusammensetzung, die jedoch anstelle von Blei-Acylcyanamid dieselbe Menge dreibasisches Bleisulfat enthalten, eine wesentlich bessere Transparenz.

Beispiel 17

Dem Grundansatz aus Beispiel 15 wurden 0,1 GT Lauroylcyanamid-Mangansalz (Beispiel 9) zugemischt. Bei der Prüfung der stabilisierten Formmasse nach dem statischen Thermostabilitätstest wurde die erste Verfärbung nach 30 Minuten und der Stabilitätsabbruch nach 40 Minuten festgestellt.

Beispiel 18

Dem Grundansatz aus Beispiel 15 wurden 0,1 GT Stearoylcyanamid-Mangansalz (Beispiel 10) zugemischt. Im statischen Thermostabilitätstest zeigte die stabilisierte Formmasse die erste Verfärbung nach 30 Minuten; der Stabilitätsabbruch wurde nach 40 Minuten festgestellt.

Beispiel 19

Einem Grundansatz aus

100 GT Suspensions-PVC (K-Wert 61; Vinoflex S 6115; Hersteller: BASF AG, Ludwigshafen)
1,0 GT Calciumstearat
0,5 GT Zinkstearat

wurden 0,5 eines Acylcyanamid-Zinksalzes, dessen Acylrest sich von einer gehärteten Ricinolsäure ableitete (Beispiel 11), zugemischt. Die stabilisierte Formmasse wurde dem statischen Thermostabilitätstest unterworfen. Dabei wurde die erste Verfärbung nach 10 Minuten und der Stabilitätsabbruch nach 40 Minuten beobachtet.

**Patentansprüche**

1. Acylcyanamide der Formel (I),

$$(R-\overset{\overset{O}{\parallel}}{C}-\overset{\ominus}{N}-CN)_2\ M^{2\oplus} \qquad (I)$$

in der R einen geradkettigen oder verzweigten Alkyl- oder Alkenylrest mit 5 bis 21 Kohlenstoffatomen bedeutet, der gegebenenfalls mit OH—, O—$CH_2$—$CH_2$—OH— und/oder O—R'-Gruppen substituiert sein kann, wobei R' einen Alkylrest mit 1 bis 4 Kohlenstoffatomen darstellt, während M für ein Mangan-, Eisen-, Kobalt-, Nickel-, Zink-, Cadmium-, Kupfer- und/oder Bleikation steht.

2. Verfahren zur Herstellung von Acylcyanamiden der Formel (I)

$$(R-\overset{\overset{O}{\|}}{C}-\overset{\ominus}{N}-CN)_2\ M^{2\oplus} \qquad (I)$$

in der R einen geradkettigen oder verzweigten Alkyl- oder Alkenylrest mit 5 bis 21 Kohlenstoffatomen bedeutet, der gegebenenfalls mit OH—, $O-CH_2-CH_2-OH$— und/oder O—R'-Gruppen substituiert sein kann, wobei R' einen Alkylrest mit 1 bis 4 Kohlenstoffatomen darstellt, während M für ein Mangan-, Eisen-, Kobalt-, Nickel-, Zink-, Cadmium-, Kupfer- und/oder Bleikation steht, dadurch gekennzeichnet, daß man Acylcyanamid-Alkalimetallsalze der Formel II,

$$(R-\overset{\overset{O}{\|}}{C}-\overset{\ominus}{N}-CN)_2\ M^{+} \qquad (II)$$

in der R die für die Formel I angegebene Bedeutung hat und M einen Alkalimetallkation, vorzugsweise ein Lithium-, Natrium- oder Kaliumkation, darstellt, in wässriger oder wässrig-/methanolischer Lösung mit stöchiometrischen Mengen eines wasserlöslichen Mangan-, Eisen-, Kobalt-, Nickel-, Zink-, Cadmium-, Kupfer- und/oder Bleisalzes umsetzt und das entstandene Acylcyanamid der Formel I aus dem Reaktionsgemisch isoliert.

3. Verfahren nach Anspruch 2, dadurch gekennzeichnet, daß M in der Formel II ein Natriumkation darstellt.

**Revendications**

1. Acylcyanamides de la formule (I),

$$(R-\overset{\overset{O}{\|}}{C}-\overset{\ominus}{N}-CN)_2\ M^{2\oplus} \qquad (I)$$

dans laquelle R est un résidu alkyle ou alcényle à chaîne droite ou ramifiée comportant 5 à 21 atomes de carbone, qui peut être substitué le cas échéant par des groupes OH, $O-CH_2-CH_2-OH$ et/ou par des groupes O—R', dans lesquels R' représente un résidu alkyle comportant 1 à 4 atomes de carbone, tandis que M représente un cation de manganèse, de fer, de cobalt, de nickel, de zinc, de cadmium, de cuivre et/ou de plomb.

2. Procédé de fabrication des acylcyanamides de la formule (I)

$$(R-\overset{\overset{O}{\|}}{C}-\overset{\ominus}{N}-CN)_2\ M^{2\oplus} \qquad (I)$$

dans laquelle R est un résidu alkyle ou alcényle à chaîne droite ou ramifiée comportant 5 à 21 atomes de carbone, qui peut être substitué le cas échéant par des groupes OH, $O-CH_2-CH_2-OH$ et/ou par des groupes O—R', dans lesquels R' représente un résidu alkyle comportant 1 à 4 atomes de carbone, tandis que M représente un cation de manganèse, de fer, de cobalt, de nickel, de zinc, de cadmium, de cuivre et/ou de plomb, caractérisé en ce que l'on fait réagir des acylcyanamides sous forme de sel de métal alcalin de la formule II,

$$(R-\overset{\overset{O}{\|}}{C}-\overset{\ominus}{N}-CN)_2\ M^{+} \qquad (II)$$

dans laquelle R possède la signification indiquée pour la formule I et M représente un cation de métal alcalin, de préférence un cation de lithium, de sodium ou de potassium, en solution aqueuse ou aqueuse/méthanolique, avec des quantités stoechiométriques d'un sel hydrosoluble de manganèse, de fer, de cobalt, de nickel, de zinc, de cadmium, de cuivre et/ou de plomb et en ce que l'on isole du mélange réactionnel l'acylcyanamide de la formule I ainsi formé.

3. Procédé selon la revendication 2, caractérisé en ce que M représente un cation de sodium dans la formule II.

**Claims**

1. Acylcyanamides corresponding to the following formula

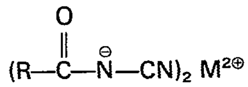

(I)

in which R is a straight-chain or branched $C_5$—$C_{21}$ alkyl or alkenyl group which may optionally be substituted by OH—, O—$CH_2$—$CH_2$—OH— and/or O—R'— groups, where R' is a $C_1$—$C_4$ alkyl group, while M is a manganese, iron, cobalt, nickel, zinc, cadmium, copper and/or lead cation.

2. A process for the preparation of acylcyanamides corresponding to the following formula

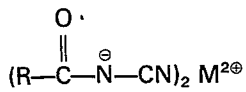

(I)

in which R is a straight-chain or branched $C_5$—$C_{21}$ alkyl or alkenyl group which may optionally be substituted by OH—, O—$CH_2$—$CH_2$—OH— and/or O—R'— groups, where R' is a $C_1$—$C_4$ alkyl group, while M is a manganese, iron, cobalt, nickel, zinc, cadmium, copper and/or lead cation, characterized in that acylcyanamide alkali metal salts corresponding to the following formula

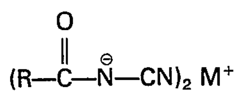

(II)

in which R is as defined in formula I and M is an alkali metal cation, preferably a lithium, sodium or potassium cation, are reacted in aqueous or aqueous methanolic solution with stoichiometric quantities of a water-soluble manganese, iron, cobalt, nickel, zinc, cadmium, copper and/or lead salt and the acylcyanamide of formula I formed is isolated from the reaction mixture.

3. A process as claimed in claim 2, characterized in that M in formula II is a sodium cation.